# EUROPÄISCHE PATENTSCHRIFT

(11) **EP 2 356 698 B1**
(45) Veröffentlichungstag und Bekanntmachung des Hinweises auf die Patenterteilung: **27.01.2016**
(21) Anmeldenummer: 09763832.4
(22) Anmeldetag: 13.11.2009
(51) Int. Cl.: H02S 40/34

(54) **Solarpaneel, Verfahren zum Herstellen eines solchen Solarpaneels und Überbrückungsdose**
Solar panel, method for production of such a solar panel and bridging socket
Panneau solaire, procédé de fabrication de ce panneau solaire et boîtier de pontage

(30) Priorität: 14.11.2008 DE 102008057327
(43) Veröffentlichungstag der Anmeldung: 17.08.2011
(73) Patentinhaber: Yamaichi Electronics Deutschland GmbH, 85609 Aschheim-Dornach (DE)
(72) Erfinder: EBERLE, Erwin, 80687 München (DE)
(74) Vertreter: Müller-Boré & Partner Patentanwälte PartG mbB
(86) Internationale Anmeldenummer: PCT/EP2009/008115
(87) Internationale Veröffentlichungsnummer: WO 2010/054837

(56) Entgegenhaltungen:
- EP-A2- 1 496 577
- EP-A2- 1 729 348
- EP-A2- 1 729 369
- DE-A1-102005 044 939

## Beschreibung

Die vorliegende Erfindung betrifft ein Solarpaneel, ein Verfahren zum Herstellern und eine Überbrückungsdose.

Herkömmliche Solarmodule zur Erzeugung elektrischer Energie aus Sonnenlicht umfassen eine oder mehrere einzelne Solarzellen. Je nach gewünschter vom Solarmodul zur Verfügung zu stellenden Spannung und/oder Stromstärke werden einzelne Solarzellen innerhalb des Moduls parallel und/oder in Reihe geschaltet und damit zu Solarzellengruppen zusammengefaßt. Die Solarzellengruppen werden zu einem flachen Solarmodul zusammengefaßt.

Die elektrischen Anschlüsse der Solarzellengruppen des Solarmoduls werden nach außen geführt. Bei partieller Verringerung der Bestrahlungsintensität durch Sonnenlicht auf einzelne Solarzellen bzw. Solarzellengruppen, beispielsweise durch Verschmutzung oder Schattenwurf, können unter anderem folgende Effekte auftreten;
(1) Eine (gleichmäßige) Verringerung der Bestrahlungsintensität innerhalb der zusammen geschalteten Solarzellengruppen führt zu einer Leistungsverminderung der jeweiligen Solarzellengruppe.
(2) Durch eine partielle Abschattung einer Solarzelle innerhalb einer Solarzellengruppe wirkt diese abgeschattete Solarzelle als Sperrdiode bzw. Widerstand innerhalb des Stromkreises der Solarzellengruppe, was zum einen dazu führen kann, daß die gesamte Solarzellengruppe keine elektrische Energie mehr liefern kann und zum anderen zu einer Beschädigung der abgeschatteten Solarzelle führen kann und damit zum dauerhaften Ausfall der Solarzellengruppe. In jedem Fall können zwischen den herausgeführten Anschlüssen der Solarzellengruppen eines Solarmoduls, je nach Bestrahlungsintensität auf die einzelnen Solarzelle, unterschiedliche Spannungen anliegen. Eine Reihenschaltung der Solarzellengruppen durch entsprechende Schaltung der nach außen geführten Anschlüsse führt analog zu den oben genannten Problemen.

Um die mit der unterschiedlichen Bestrahlungsintensität der Solarzelle verbundenen Probleme zu vermeiden, werden herkömmlich sogenannte Bypass-Dioden verwendet, die elektrisch antiparallel zu den Solarzellengruppen geschaltet werden. Diese Bypass-Dioden haben die Wirkung, daß der stromfluß durch das Solarmodul an Solarzellengruppen, welche eine nur geringe Leistung liefern, vorbei geleitet wird, d.h. die Anschlüsse dieser Solatzellengruppe eines Solarmoduls werden durch die Bypass-Diode kurz geschlossen und die entsprechende Solarzellengruppe dadurch überbrückt. Somit liefert eine solche Solarzellengruppe zwar keinen Anteil mehr zur Gesamtleistung des Solarmoduls, der Gesamtstromfluß durch das Solarpaneel ist jedoch im wesentlichen ungehindert und eine Beschädigung einzelner Solarzellen wird verhindert.

Solarpaneele umfassen daher neben dem Solarmodul in der Regel eine elektrische Anschlußdose mit einer Vielzahl von Kontaktvorrichtungen und einer entsprechend angepaßten Anzahl von Bypass-Dioden. Dünne Leiterbänder, welche mit den einzelnen Solarzellengruppen elektrisch verbunden sind, sind aus dem Solarmodul heraus geführt und in der Regel mit den in der einen Anschlußdose angeordneten Kontaktvorrichtungen kontaktiert, die untereinander mit Bypass-Dioden elektrisch verbunden sind.

Druckschrift EP 1 729 369 A2 offenbart eine Anschlußvorrichtung, welche elektrische Folienleiter eines Solarmoduls mit mindestens einer Verbindungsleitung verbindet. Die elektrischen Folienleiter sind mit einer Klemmfeder befestigbar, wobei jeweils zwei Folienleiter über die Klemmfedern mittels einer Bypass-Diode elektrisch verbunden sind.

Druckschrift EP 1 49 577 A2 offenbart ein von dem Gehäuse der elektrischen Anschlußdose verschiedenes Ansteckmodul, das Dioden aufweisen kann wobei das Ansteckmodul einfach abgezogen und durch ein neues Ansteckmodul ersetzt werden kann.

Es ist Aufgabe der Erfindung, ein Solarpaneel, ein Verfahren zum Herstellen und eine Überbrückungsdose bereitzustellen, welche eine einfache, materialsparende Montage der Bypass-Dioden ermöglichen.

Die Aufgabe wird durch die unabhängigen Ansprüche gelöst. Bevorzugte Ausführungsvarianten und/oder Ausführungsformen sind Gegenstand der abhängigen Ansprüche.

### Solarpaneel gemäß einem Aspekt

Ein Aspekt der vorliegenden Erfindung betrifft ein Solarpaneel, umfassend:
- ein Solarmodul mit zumindest zwei elektrischen Leitern und
- eine elektrische Überbrückungsdose, mit
   -- einem elektrisch isolierenden Diodenhalter und
   -- einer Axial-Diode mit zwei Anschlüssen,
      wobei die Axial-Diode mittels des Diodenhalters in einer Kontaktposition gehalten ist,
      wobei in der Kontaktposition der eine elektrische Leiter des Solarmoduls mit dem einen Anschluß unmittelbar kontaktiert ist und der andere elektrische Leiter des Solarmoduls mit dem anderen Anschluß unmittelbar kontaktiert ist, so daß die zwei elektrischen Leiter mittels der Axial-Diode elektrisch miteinander verbunden sind.

Vorteilhafterweise ist die Überbrückungsdose einfach zu montieren und es können mehrere Überbrückungsdosen unabhängig voneinander an beliebigen Stellen des Solarmoduls befestigt werden: Dadurch ist es vorteilhafterweise möglich eine Überbrückungsdose z.B. an einem zu einer weiteren Überbrückungsdose entgegengesetzten Ende des Solarmoduls anzuordnen. Vorteilhafterweise ist es dadurch nicht notwendig die elektrischen Leiter eines Solarmoduls ist eine einzige Anschlußdose zusammen zu führen, so daß das Design des Solarmoduls vereinfacht werden kann. Dadurch können die Leiterlängen an einem Solarmodul vorteilhafterweise minimiert werden, wodurch sich eine Materialersparnis ergibt.

Für den Fall, daß lediglich eine Axial-Diode in der Überbrückungsdose angeordnet ist, wird vorteilhafterweise erreicht, daß die Summation von Abwärme mehrerer Axial-Dioden innerhalb einer Überbrückungsdose vermieden werden kann und somit eine Beschädigung bzw. Alterung der Axial-Diode aufgrund übermäßiger Wärmeentwicklung verhindert wird.

Das mit der Überbrückungsdose versehene Solarmodul wird als Solarpaneel bezeichnet. Das Solarmodul umfaßt zumindest eine, d.h. 1, 2, 3, 4, 5, 6, 7, 8, 9, 10, usw. gegebenenfalls in Reihe geschaltete spannungserzeugende Solarzelle(n) bzw. Solarzellengruppe(n), wobei jede Solarzelle zwei elektrische Leiter bzw. ein Leiterpaar aufweist, die den Plus- und Minuspol der Solarzelle bilden und die an einer Anschlußseite des Solarmoduls aus diesem heraus geführt werden. Folglich umfaßt ein Solarmodul zumindest zwei, d.h. 2, 4, 6, 8, 10, 12, 14, 16, 18, 20, usw. elektrische Leiter. Die "Anschlußseite bzw. -fläche" im Sinne der Erfindung beschreibt eine Seite bzw. Fläche, die insbesondere einer lichtaktiven Seite bzw. Fläche gegenüber liegt. In anderen Worten ist die lichtaktive Seite bzw. Fläche ausgelegt, Licht aufzunehmen bzw. in das Solarmodul zu führen. Die "Anschlußseite bzw. -fläche" ist insbesondere die Rückseite des Solarmoduls, mittels welcher das Solarmodul beispielsweise befestigt bzw. montiert werden kann.

Um einzelne Solarzellen bzw. Solarzellengruppen mittels einer Bypass-Diode zu schützen, sind der Plus- und Minuspol zumindest einer Solarzelle bzw. Solarzellengruppe mit einer Überbrückungsdose versehen. In der Überbrückungsdose ist eine Axial-Diode bzw. eine Diode mit Axial-Gehäuse als Bypass-Diode angeordnet und kontaktiert in der Kontaktposition unmittelbar den Plus- und Minuspol einer Solarzelle des Solarmoduls, so daß Plus- und Minuspol der Solarzelle über die Axial-Diode elektrisch miteinander verbunden sind. Die Axial-Diode erzeugt einen Kurzschluß zwischen den beiden Polen, wenn die von der Solarzelle erzeugte Spannung einen vorbestimmten Grenzwert unterschreiten.

Die Überbrückungsdose weist über die Anschlüsse der Axial-Diode hinaus keine weiteren elektrischen Kontakte auf, insbesondere keine Eingänge und/oder Ausgänge bzw. Anschlußpole, um die Axial-Diode bzw. die elektrischen Leiter des Solarmoduls mit einer externen Einrichtung elektrisch zu verbinden. In anderen Worten ist die Überbrückungsdose vorzugsweise frei von elektrischen Anschlüssen und/oder Leitungen und/oder Steckern, die ein Abgreifen des elektrischen Stromes von dem Solarmodul ermöglichen.

Der Begriff "Kontakt" im Sinne der vorliegenden Erfindung beinhaltet insbesondere elektrischen und/oder mechanischen Kontakt, so daß eine Eingangs- bzw. Ausgangsanschlußdosenkontakteinrichtung ausgelegt ist einen elektrischen und/oder einen mechanischen Kontakt mit den elektrischen Leitern der Solarzelle herzustellen. Der Kontakt zwischen einem Anschluß der Axial-Diode und einem elektrischen Leiter des Solarmoduls ist unmittelbar, insbesondere durch Löten, Schweißen, Klemmen, Schrauben oder dergleichen, hergestellt. Das heißt, daß kein weiteres elektrisch leitfähiges Element zwischen einem Anschluß der Axial-Diode und einem elektrischen Leiter des Solarmoduls angeordnet ist, wobei eine für die Verlötung erforderliche Menge eines Lotes, die beim Lötvorgang zwischen Anschluß und elektrischem Leiter rinnt, nicht als weiteres elektrisch leitfähiges Element angesehen wird. Bevorzugt kann ein elektrischer Leiter des Solarmoduls mittels eines Klemm- bzw. Befestigungsmittels an einem Anschluß der Diode festgeklemmt werden, wobei das Klemm- bzw. Befestigungsmittel insbesondere eine Klammer bzw. eine Klemme aus Metall oder Kunststoff sein kann, welche den elektrischen Leiter und den Anschluß gegeneinander pressen, um den unmittelbaren elektrischen Kontakt zwischen elektrischem Leiter und Anschluß sicher herzustellen. In diesem Fall ist es auch möglich, daß ein Element des Klemm- bzw. Befestigungsmittels zumindest bereichsweise zwischen dem Anschluß und dem elektrischen Leiter angeordnet ist. Es ist auch möglich, daß ein Element des Klemm- bzw. Befestigungsmittels derart zwischen dem Anschluß und dem elektrischen Leiter angeordnet ist, daß der Anschluß den elektrischen Leiter nicht mechanisch kontaktiert. In diesem Fall ist zumindest dieses Element des Klemm- bzw. Befestigungsmittels elektrisch leitfähig. Vorzugsweise kann auch diese Konfiguration als unmittelbare Verbindung des Anschlusses mit dem Leiter angesehen werden, da das vorgenannte Element des Klemm- bzw. Befestigungsmittels in erster Linie zur Befestigung des Abschlusses mit dem Leiter verwendet wird. Beispielsweise kann das Klemm- bzw. Befestigungsmittel an dem Leiter oder dem Anschluß angeordnet sein und somit als Bestandteil des Leiters oder des Anschlusses betrachtet werden. Es ist auch möglich, daß zwei Klemm- bzw. Befestigungsmittel angeordnet sind, wobei eines an dem Leiter und eines an dem Anschluß angeordnet ist. Diese Ausführungen gelten analog für den zweiten Leiter und den zweiten Anschluß.

Der Begriff "Kontaktposition" im Sinne der vorliegenden Erfindung beschreibt die räumliche Position der Axial-Diode, in welcher die Axial-Diode mittels des Diodenhalters gehalten ist, wenn die Anschlüsse der Axial-Diode mit den zugeordneten elektrischen Leitern des Solarmoduls kontaktiert sind. Der Diodenhalter besteht dabei aus einem isolierenden, d.h. elektrisch nicht leitfähigem, Material, vorzugsweise einem Kunststoff bzw. einem Polymer, so daß die Anschlüsse der Axial-Diode über den Diodenhalter nicht elektrisch verbunden sind.

Die Axial-Diode weist ein Axial-Gehäuse mit zwei Anschlüssen auf, beispielsweise ein Gehäuse gemäß eines der Gehäusetypen DO-35, DO-41, SC-40, SOD-27, SOD-57, DO-204AH (Gehäuse aus Glas) oder DO-15, DO-41, DO-201AE, DO-210AD, P-6, R-6, P600, DO-204AR (Gehäuse aus Kunststoff) oder DO-1 (Metallgehäuse). Die Anschlüsse der Axial-Diode sind insbesondere als zylindrische Drähte ausgebildet.

### Bevorzugte Ausführuhgsformen der Anschlußdose

Vorzugsweise sind die zwei elektrischen Leiter bandförmig ausgestaltet. Mit anderen Worten ist der bandförmige Leiter ein flächiger Leiter bzw. ein flacher Leiter bzw. ein Leiterband. Dabei weist der elektrische Leiter insbesondere ein Verhältnis von Breite zu Dicke größer als 2, besonders bevorzugt größer als 5, größer als 10, größer als 20, größer als 50 und insbesondere größer als 100 auf. Vorteilhafterweise wird durch eine vergrößerte Kontaktfläche zwischen dem Anschluß der Axial-Diode und dem elektrischen Leiter der Übergangs- bzw. Kontaktwiderstand zwischen dem elektrischen Leiter des Solarmoduls und dem Anschluß verringert.

Vorzugsweise sind die zwei elektrischen Leiter als Folienleiter ausgebildet, d.h. als ein Verbund aus einer Polymerfolie mit einem daran befestigten elektrischen Leiter, wobei die Befestigung insbesondere mittels Aufdampfen oder Aufkleben an der Polymerfolie erfolgt ist.

Vorzugsweise sind die zwei elektrischen Leiter derart rückstellfähig ausgebildet und angeordnet, daß jeweils eine Kontaktkraft an dem zugeordneten Anschluß der Axial-Diode anliegt, wenn sich die Axial-Diode in der Kontaktposition befindet. Rückstellfähig heißt, daß die elektrischen Leiter derart elastisch und/oder plastisch verformbar sind, daß sie nach Einwirken einer verformenden Kraft im wesentlichen wieder in die Ruheposition zurückkehren.

Vorzugsweise umfaßt der Diodenhalter zwei Anschlußhalteeinrichtungen, wobei jede Anschlußhalteeinrichtung auf der dem Solarmodul abgewandten Seite eine Anschlußaufnahme aufweist, wobei jeder Anschluß eine Längserstreckung entlang einer Längsrichtung X aufweist, wobei jede Anschlußaufnahme ausgelegt ist, daß der zugeordnete Anschluß entlang einer Einführrichtung Z in die Anschlußaufnahme einführbar und festlegbar ist und wobei die Längsrichtung X und die Einführrichtung Z im wesentlichen senkrecht zueinander stehen.

Mit anderen Worten ist jede Anschlußaufnahme dazu ausgelegt, daß ein Anschluß entlang der Einführrichtung Z in die Anschlußaufnahme eingeführt werden kann, bis die Kontaktposition erreicht ist, um dort festgelegt zu werden bzw. zur sein. Die Einführrichtung Z ist im wesentlichen senkrecht zur Längsrichtung X und vorzugsweise bei der Montage der Überbrückungsdose auf das Solarmodul im wesentlichen parallel zur Richtung der Schwerkraft. In der Kontaktposition ist ein weiteres Verlagern eines Anschlusses entlang der Einführrichtung Z nicht möglich. Ferner ist im wesentlichen ein Verlagern eines Anschlusses entlang oder entgegen einer Querrichtung Y nicht möglich, wobei die Querrichtung Y im wesentlichen senkrecht zur Längsrichtung X und im wesentlichen senkrecht zur Einführrichtung Z ist, so daß die Axial-Diode in der Kontaktposition festgelegt ist.

Der Begriff "im wesentlichen" kann in Bezug auf Richtungen im Sinne der vorliegenden Erfindung eine Abweichung von der bezeichneten Richtung beschreiben. Insbesondere kann dies eine geringe Abweichung, d.h. ohne signifikante Änderung der bezeichneten Richtung und des daraus resultierenden Effektes sein. So kann "im wesentlichen" ein Abweichung von der bezeichneten Richtung um weniger als etwa 20 Grad, weniger als etwa 10 Grad, weniger als etwa 5 Grad, insbesondere keine Abweichung, d.h. Identität, beschreiben.

Vorzugsweise weist die Anschlußaufnahme einen Durchmesser auf, der etwa gleich groß dem Durchmesser des Anschlusses ist.

Mit anderen Worten sind der lichte Innenabstand zwischen zwei Wandungen der Anschlußaufnahme und der Außendurchmesser des aufzunehmenden Anschlusses etwa gleich groß bzw. ist der Außendurchmesser des aufzunehmenden Anschlusses geringfügig größer, wobei geringfügig in diesem Zusammenhang insbesondere einen um etwa 0,05 am, bevorzugt einen um etwa 0,1 mm größeren Außendurchmesser bedeutet. Insbesondere sind die Wandungen der Anschlußaufnahme rückstellfähig verformbar ausgebildet sein, so daß ein Anschluß die Wandungen der Anschlußaufnahme, insbesondere elastisch, verformt, so daß der Anschluß und damit die Axial-Diode zwischen den Wandungen festgeklemmt ist. Insbesondere ist ein Anschluß in der Kontaktposition in Reibschluß mit der entsprechenden Anschlußaufnahme, so daß ein Verlagern des Anschlusses bzw. der Axial-Diode entlang oder entgegen der Einführrichtung Z nur unter Aufbringen einer vorbestimmten minimalen Verlagerungskraft K möglich ist, wobei die minimale Verlagerungskraft K größer als etwa 0,05 N, bevorzugt größer als etwa 0,1 N, weiter bevorzugt größer als etwa 0,5 N und insbesondere größer als etwa 1 N ist, so daß die Axial-Diode in der Kontaktposition verbleibt.

Vorzugsweise weist die Anschlußhalteeinrichtung auf der dem Solarmodul abgewandten Seite bzw. auf der dem Solarmodul entgegengesetzten Seite eine Rampe auf, wobei die Rampe an die Anschlußaufnahme angrenzt und wobei die von dem Solarmodul abgewandte Seite der Rampe zur Anschlußaufnahme hin abfallend geneigt ist.

Die Rampe kann beispielsweise auch als schiefe Ebene, Gleitfläche, Rollfläche, Gleitkante bzw. Gleitgrat bezeichnet werden, da die Rampe beispielsweise als Fläche oder als Grat ausgebildet sein kann. Die Rampe ist zur Anschlußaufnahme hin entlang der Einführrichtung Z fallend bzw. abfallen geneigt, und grenzt mit ihrem Fuß an die Anschlußaufnahme an bzw. geht die Rampe mit ihrem Fuß in die Anschlußaufnahme über. Ein Anschluß einer Axial-Diode, kann auf der Rampe aufliegen, wobei aufgrund der Neigung bzw. des Fallens der Rampe der Anschluß (und damit die Axial-Diode) entlang des Fallens bzw. dem Gefälle der Rampe rollt bzw. rutscht, so daß der Anschluß zu den Anschlußaufnahme hin verlagert wird. Alternativ oder zusätzlich ist die Axial-Diode mittels der Rampen in einfacher Weise manuell oder automatisch zu der Anschlußaufnahme hin führbar.

Besonders bevorzugt sind die Rampen und die Anschlußaufnahmen derart ausgelegt, daß die Anschlüsse nach dem Rollen bzw. Rutschen bzw. Hinführen in die Anschlußaufnahmen aufgenommen werden, so daß die Axial-Diode in die Kontaktposition gelangt und dort festgelegt wird bzw. werden kann. Vorzugsweise umfaßt der Diodenhalter eine Diodengehäusehalteeinrichtung, wobei die Diodengehäusehalteeinrichtung auf der dem Solarmodul abgewandten Seite eine Diodengehäuseaufnahme aufweist, wobei die Axial-Diode eine Längserstreckung entlang einer Längsrichtung aufweist, wobei die Diodengehäuseaufnahme ausgelegt ist, daß die Axial-Diode entlang einer Einführrichtung in die Diodengehäuseaufnahme einführbar und festlegbar ist und wobei die Längsrichtung und die Einführrichtung im wesentlichen senkrecht zueinander stehen.

Vorzugsweise weist die Diodengehäuseaufnahme einen Durchmesser auf, der etwa gleich groß dem Durchmesser des Diodengehäuses ist.

Vorzugsweise weist die Diodengehäusehalteeinrichtung auf der dem Solarmodul abgewandten Seite eine Rampe auf, wobei die Rampe an die Diodengehäuseaufhahme angrenzt und wobei die von dem Solarmodul abgewandte Seite der Rampe zur Diodengehäuseaufnahme hin abfallend geneigt ist. Die Ausgestaltung und Funktion der Rampe ist entsprechend zu den obigen Ausführungen bezüglich der Rampe der Anschlußhalteeinrichtung.

Für den Fall, daß sowohl eine Diodengehäusehalteeinrichtung als auch eine oder mehrere Anschlußhalteeinrichtung(en) in der Überbrückungsdose ausgebildet sind, können die Diodengehäusehalteeinrichtung und die Anschlußhalteeinrichtung(en) getrennt bzw. beabstandet voneinander oder einstückig miteinander ausgebildet sein.

Vorzugsweise umfaßt das Solarpaneel ein Überbrückungsdosengrundelement mit zumindest einer Durchführöffnung, wobei die elektrischen Leiter des Solarmoduls durch die zumindest eine Durchführöffnung geführt sind, um mit der Axial-Diode kontaktiert zu sein. Weiter vorzugsweise umfaßt ein Überbrückungsdosengrundelement zwei Durchführöffnungen, so daß jedem Anschluß der Axial-Diode eine Durchführöffnung zugeordnet ist.

Besonders bevorzugt ist der Diodenhalter zusammen mit dem Überbrückungsdosengrundelement einstückig aus einem Kunststoff bzw. Polymer ausgebildet.

Vorzugsweise ist jeweils ein elektrischer Leiter des Solarmoduls durch eine zugeordnete Durchführöffnung geführt, um mit der zumindest einen Axial-Diode kontaktiert zu sein.

Vorzugsweise umfaßt das Überbrückungsdosengrundelement zumindest ein Überbrückungsdosenbefestigungselement, wobei die Überbrückungsdose mittels des zumindest einen Überbrückungsdosenbefestigungselements an dem Solarmodul befestigt ist.

Ein Überbrückungsdosengrundelement bzw. eine Überbrückungsdosengrundplatte ist besonders vorzugsweise dazu ausgelegt, um mit dem Solarmodul verklebt zu sein. Insbesondere ist die Seite des Überbrückungsdosengrundelements, die an dem Solarmodul befestigt wird, im wesentlichen eben ausgebildet. Insbesondere kann ein Haftmittel auf dem Überbrückungsdosengrundelement aufgetragen sein. Das Haftmittel kann beispielsweise einen Haftkleber und/oder einen Schmelzkleber und/oder ein Klebeband, usw. umfassen.

Vorzugsweise weist die Überbrückungsdose einen Überbrückungsdosendeckel auf, wobei besonders bevorzugt der Überbrückungsdosendeckel eine Einfüllöffnung aufweist. Insbesondere ist die Einfüllöffnung dazu ausgelegt, eine Extrusionsdüse für flüssiges Kunstharz zu kontaktieren und/oder aufzunehmen. Dazu ist die Einfüllöffnung insbesondere kegelförmig ausgebildet. Entsprechend kann der Überbrückungsdosendeckel eine, zwei oder mehrere Entlüftungsöffnungen zum Entlüften der Überbrückungsdose beim Ausgießen der Überbrückungsdose mit Kunstharz aufweisen.

Weiter bevorzugt ist an dem Überbrückungsdosendeckel das Klemm- bzw. Befestigungsmittel, welches den elektrischen Leiter an dem Anschluß der Axial-Diode festklemmt, derart angeordnet und befestigt, daß das Festklemmen durch das Schließen des Überbrückungsdosendeckels erfolgt. Mit anderen Worten ist das Klemm- bzw. Befestigungsmittel besonders bevorzugt an der dem Inneren der Überbrückungsdose zugewandten Seite des Überbrückungsdosendeckels befestigt.

Vorzugsweise ist das Innere der Überbrückungsdose feuchtigkeitsdichtend mit Kunstharz ausgegossen.

Die Überbrückungsdose ist bevorzugt mit einem isolierenden Harz ausgegossen, um die einzelnen Bestandteile fest miteinander zu verbinden. Vorteilhafterweise ist durch das Ausgießen mit Kunstharz ein besonders guter Schutz vor eindringender Feuchtigkeit, z.B. nach der standardisierten Norm IP67 zu erreichen.

Weiterhin kann das Kunstharz auch dazu dienen, die Überbrückungsdose an dem Solarmodul zu befestigen, wenn z.B. das Kunstharz eine chemische Verbindung mit dem Solarmodul eingeht. In diesem Fall kann das Kunstharz als Haftmittel dienen. Dies gilt insbesondere für den Fall, daß die Überbrückungsdose grundelementfrei ausgebildet ist. In diesem Fall kann der Diodenhalter an dem Solarmodul angeordnet werden und die elektrischen Leiterkontakte des Solarmoduls mit den Anschlüssen der Axial-Diode köntaktiert werden. Anschließend kann der Überbrückungsdosendeckel angeordnet werden und der somit gebildete Hohlraum mit Kunstharz ausgegossen werden, wodurch eine innige Verbindung zwischen dem Überbrückungsdosendeckel und dem Kunstharz und der Fläche des Solarmoduls herstellbar ist, wobei die Axial-Diode in das Kunstharz eingebettet ist. Somit besteht das Gehäuse der Überbrückungsdose im wesentlichen aus dem Überbrückungsdosendeckel, wobei eine Seite der Überbrückungsdose durch das Solarmodul verschlossen ist.

### Herstellungsverfahren gemäß einem Aspekt

Ein Aspekt der vorliegenden Erfindung betrifft ein Verfahren zum Herstellen eines Solarpaneels, umfassend die Schritte:
- Bereitstellen eines Solarmoduls mit
   -- zwei elektrischen Leitern,
- Bereitstellen einer Axial-Diode mit zwei Anschlüssen, wobei die Axial-Diode und die Anschlüsse eine Längserstreckung X aufweisen,
- Bereitstellen zumindest einer elektrischen Überbrückungsdose, mit einem elektrisch isolierenden Diodenhalter, welcher zwei Anschlußhalteeinrichtungen umfaßt,
   wobei jede Anschlußhalteeinrichtung auf der dem Solarmodul abgewandten Seite eine Anschlußaufnahme aufweist,
   wobei jede Anschlußaufnahme ausgelegt ist, daß der zugeordnete Anschluß entlang einer Einführrichtung Z in die Anschlußaufnahme einführbar und festlegbar ist und
   wobei die Längsrichtung X und die Einführrichtung Z im wesentlichen senkrecht zueinander stehen,
- Befestigen der Überbrückungsdose auf dem Solarmodul,
- Einführen der Anschlüsse in die Anschlußaufnahmen und Festlegen der Axial-Diode in einer Kontaktposition
- unmittelbares Kontaktieren des einen elektrischen Leiters des Solarmoduls mit dem einen Anschluß und unmittelbares Kontaktieren des anderen elektrischen Leiters des Solarmoduls mit dem anderen Anschluß, so daß die zwei elektrischen Leiter mittels der Axial-Diode elektrisch miteinander verbunden sind.

Vorteilhafterweise erfolgt das Kontaktieren der elektrischen Leiter unmittelbar mit den Anschlüssen der Axial-Diode, weshalb die auftretenden Kontaktwiderstände vorteilhafterweise verringert sind. Weiter vorteilhaft sind aufgrund der unmittelbaren Kontaktierung die zu handhabenden Teile zahlenmäßig reduziert, so daß das Verfahren zum Herstellen besonders einfach durchzuführen ist.

Das Befestigen der Überbrückungsdose kann insbesondere mittels eines Klebemittels erfolgen. Das Befestigen kann beispielsweise ein Auftragen, insbesondere ein Aufsprühen eines verformbaren, insbesondere flüssigen Klebers an bzw. auf einer Kontaktfläche der Überbrückungsdose umfassen, mit welcher die Überbrückungsdose mit dem Solarmodul in Kontakt tritt. Der Kleber kann beispielsweise die Kontaktfläche vollständig bedecken. Es ist auch möglich, daß der Kleber lediglich an diskreten Punkten bzw. Flächen auf bzw. an der Kontaktfläche aufgetragen ist.

Weiterhin kann das Befestigen der Überbrückungsdose an dem Solarmodul beinhalten, daß der Kleber seine klebende bzw. haftende Eigenschaft erhält. Der Kleber kann z.B. mit Wärme und/oder mit Licht behandelt werden, wie z.B. mit UV Licht bestrahlt werden.

Die vorangehenden Ausführungen gelten sinngemäß, falls der Kleber an bzw. auf der Kontaktfläche des Solarmoduls angeordnet ist. Der Kleber kann beispielsweise ein sogenannter Zwei-Komponentenkleber sein, wobei eine Komponente an der Überbrückungsdose angeordnet ist und eine weitere Komponente an dem Solarmodul. Das Befestigen kann somit beinhalten, daß die beiden Komponenten miteinander in Kontakt gebracht werden. Alternativ oder zusätzlich kann das Befestigen auch umfassen, daß eine Schutzfolie von einem Haft- bzw. Klebemittel entfernt wird.

### Bevorzugte Ausführungsvarianten des Verfahrens

Vorzugsweise weist die Überbrückungsdose ein Haftmittel als Überbrückungsdosenbefestigungselement auf, wobei die Überbrückungsdose mittels des Haftmittels an dem Solarmodul befestigt wird.

Vorzugsweise umfaßt das Verfahren den weiteren Schritt: Anordnen eines Überbrückungsdosendeckels an der Überbrückungsdose. Bevorzugt umfaßt das obige Anordnen ebenfalls ein im wesentlichen fluiddichtes, insbesondere wasserdichtes und/oder luftdichtes Abdichten oder Verschließen.

Vorzugsweise umfaßt das Verfahren den weiteren Schritt: Ausgießen des Inneren der Überbrückungsdose mit Kunstharz durch eine Einfüllöffnung des Überbrückungsdosendeckels. Bevorzugt umfaßt das Ausgießen das im wesentlichen fluiddichte, insbesondere wasserdichte und/oder luftdichte Abdichten bzw. Verschließen des Inneren der Überbrückungsdose. Die Axial-Diode und die damit verbunden elektrischen Leiter sind dadurch vorteilhafterweise vor Umwelteinflüssen, insbesondere vor Feuchtigkeit, geschützt. Weiter bevorzugt umfaßt das Ausgießen ebenfalls die Befestigung auf dem Solarmodul.

### Überbrückungsdose gemäß einem Aspekt

Ein Aspekt der vorliegenden Erfindung betrifft eine Überbrückungsdose, umfassend:
- ein Überbrückungsdosengrundelement, welches ausgelegt ist an einem Solarmodul befestigt zu sein,
- einen elektrisch isolierenden Diodenhalter, mit zwei Anschlußhalteeinrichtungen,
   wobei jede Anschlußhalteeinrichtung auf der dem Überbrückungsdosengrundelement abgewandten Seite eine Anschlußaufnahme aufweist,
   wobei jede Anschlußaufnahme ausgelegt ist, daß ein Anschluß einer Axial-Diode, welcher sich in Längsrichtung X erstreckt, entlang einer Einführrichtung Z in die Anschlußaufnahme einführbar und in einer Kontaktposition festlegbar ist und
   wobei die Längsrichtung X und die Einführrichtung Z im wesentlichen senkrecht zueinander stehen.

Vorzugsweise weist die Anschlußhalteeinrichtung auf der dem Überbrückungsdosengrundelement abgewandten Seite eine Rampe auf, wobei die Rampe an die Ahschlußaufnahme angrenzt und wobei die von dem Überbrückungsdosengrundelement abgewandte Seite der Rampe zur Anschlußaufnahme hin abfallend geneigt ist.

Vorzugsweise ist zumindest eine Durchführöffnung in dem Überbrückungsdosengrundelement ausgebildet ist, so daß elektrischen Leiter eines Solarmoduls durch die zumindest eine Durchführöffnung durchführbar sind.

### Verwendung gemäß einem Aspekt

Ein Aspekt der vorliegenden Erfindung betrifft die Verwendung einer Überbrückungsdose mit den oben beschriebenen Merkmalen, zur Anordnung an einem Solarmodul. Dabei wird die Überbrückungsdose an einer Anschlußseite des Solarmoduls angeordnet. Insbesondere kann danach die Überbrückungsdose mit dem Solarmodul elektrisch verbunden werden.

Die Erfindung ist nicht auf die oben beschriebenen Aspekte bzw. Ausführungsformen beschränkt. Vielmehr können einzelne Merkmale der Aspekte und/oder Ausführungsformen beliebig miteinander kombiniert werden und insbesondere somit neue Ausführungsformen gebildet werden. In anderen Worten gelten die obigen Ausführungen zu den einzelnen Merkmalen der Vorrichtung sinngemäß auch für das Verfahren und umgekehrt.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1:: eine perspektivische Ansicht einer bevorzugten Ausführungsform eines Solarpaneels in teilbestücktem Zustand und
- Figur 2:: eine perspektivische Ansicht einer Überbrückungsdose.

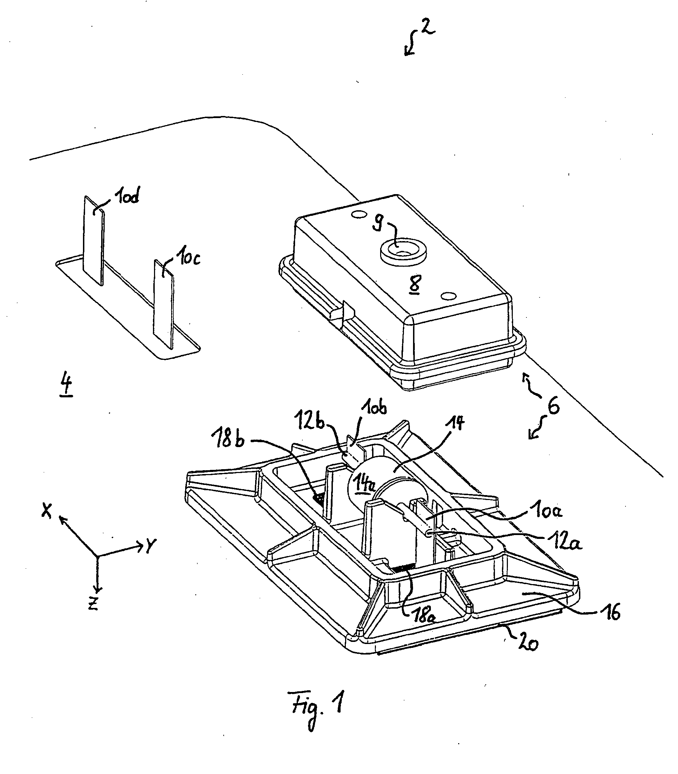

Figur 1 zeigt eine perspektivische Ansicht einer bevorzugten Ausführungsform eines Solarpaneels 2 in teilbestücktem Zustand. Das gezeigte Solarpaneel 2 umfaßt ein Solarmodul 4 und eine Überbrückungsdose 6, wobei die Überbrückungsdose 6 mit noch nicht angeordnetem Überbrückungsdosendeckel 8 gezeigt ist.

Weiter zeigt Figur 1 vier elektrische Leiter 10a-10d des Solarmoduls 4, die auf der Anschlußseite des Solarmoduls 4 aus diesem heraus geführt sind. Zwei der elektrischen Leiter 10a, 10b sind mit den Anschlüssen 12a, 12b der in Kontaktposition befindlichen Axial-Diode 14 kontaktiert. Zwei weitere elektrische Leiter 10c, 10d ragen aus dem Solarmodul hervor.

Die gezeigte Überbrückungsdose 6 umfaßt ein Überbrückungsdosengrundelement 16 mit zwei Durchführöffnungen 18a, 18b. Die Überbrückungsdose 6 ist in dieser Ausführungsform mit einem Klebeband 20 als bevorzugtem Überbrückungsdosenbefestigungselement 20 mit dem Solarmodul 4 verklebt:

Alternativ oder zusätzlich zu dem Klebeband 20 kann auf der dem Solarmodul zugewandten Seite des Überbrückungsdosengrundelements 16 ein Haftmittel, z.B.- ein Klebemittel, ein Thermoplast, usw. aufgetragen werden, um das Überbrückungsdosengrundelement 16 bzw. die Überbrückungsdose 6 an dem Solarmodul 4 zu befestigen. Alternativ oder zusätzlich kann ein Haftmittel auf der dem Solarmodul abgewandten Seite des Überbrückungsdosengrundelements 16 derart aufgetragen sein, daß das Haftmittel durch die Durchführöffnungen 18a, 18b gedrungen ist, um das Überbrückungsdosengrundelement 16 zu hintergreifen und an dem Solarmodul 4 zu befestigen, wenn das Überbrückungsdosengrundelement 16 an dem Solarmodul zum Befestigen angeordnet ist.

Die Überbrückungsdose 6 ist mittels eines Überbrückungsdosendeckets 8 verschließbar. Der Überbrückungsdosendeckel 8 kann an dem Solarmodul festgeklebt sein. Weiterhin weist der Überbrückungsdosendeckel 8 eine Einfüllöffnung 9 auf, durch welche das Innere der Überbrückungsdose 6 mit Kunstharz ausgegossen werden kann. Folglich ist es möglich, daß der Überbrückungsdosendeckel 8 mittels eines Haftmittels, z.B. eines Klebebandes, an dem Solarmodul 4 fixiert wird und anschließend das Innere mit dem Kunstharz ausgegossen wird. Durch das Kunstharz wird der Überbrückungsdosendeckel 8 an der Überbrückungsdose 6 und/oder dem Solarmodul 4 fixiert. Es ist auch möglich, daß der Überbrückungsdosendeckel 8 mit einem Werkzeug an der Überbrückungsdose 6 angeordnet und dort gehalten wird, bis das Innere der Überbrückungsdose 6 mit Kunstharz gefüllt ist und das Kunstharz soweit gehärtet ist, daß der Überbrückungsdosendeckel 8 an der Überbrückungsdose 6 und/oder dem Solarmodul 4 befestigt ist.

Die elektrische und/oder mechanische Kontaktierung der elektrischen Leiter 10a, 10b mit den zugehörigen Anschlüssen 12a, 12b der Axial-Diode 14 kann beispielsweise manuell erfolgen, in dem ein elektrischer Leiter 10a, 10b zu dem zugehörigen Anschluß 12a, 12b geführt und anschließend verlötet, gecrimpt, festgeklemmt usw. wird. Alternativ oder zusätzlich kann der elektrische Leiter 10a, 10b mit Schließen des Überbrückungsdosendeckels 8 an dem zugehörigen Anschluß 12a, 12b mittels eines Klemmittels festgeklemmt werden, welches an dem Überbrückungsdosendeckel 8 befestigt ist. Bevorzugt kann die Kontaktierung auch (wie weiter unten ausführlich beschrieben) dadurch erfolgen, daß der elektrische Leiter 10a, 10b rückstellfähig ausgebildet ist und die Anschlüsse 12a, 12b derart positioniert sind, daß der elektrische Leiter 10a, 10b eine Kontaktkraft auf den zugehörigen elektrischen Leiter 10a, 10b anlegt und den unmittelbaren elektrischen Kontakt zwischen elektrischem Leiter 10a, 10b und Anschluß 12a, 12b herstellt.

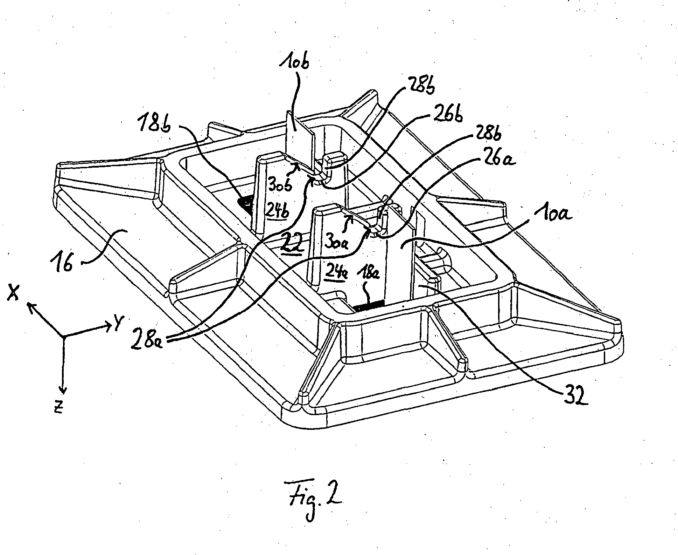

Wie in **Figur 2** gezeigt ist, umfaßt die Überbrückungsdose 6 ferner einen Diodenhalter 22, um die Axial-Diode 14 in der Kontaktposition zu halten, wobei die Axial-Diode 14 lediglich in Figur 1 gezeigt ist. Die Axial-Diode 14 bzw. die Anschlüsse 12a, 12b erstrecken entlang einer Längsrichtung X. Der Diodenhalter 22 weist zwei Anschlußhalteeinrichtungen 24a, 24b mit jeweils einer Anschlußaufnahme 26a, 26b auf. Jede Anschlußaufnahme 26a, 26b ist dazu ausgelegt, daß ein Anschluß 12a, 12b entlang einer Einführrichtung Z in die Anschlußaufnahme 26a, 26b eingeführt werden kann, bis die Kontaktposition erreicht ist. Die Einführrichtung Z ist im wesentlichen senkrecht zur Längsrichtung X und bei der Montage der Überbrückungsdose 6 auf das Solarmodul 4 im wesentlichen parallel zur Richtung der Schwerkraft. In der Kontaktposition ist ein weiteres Verlagern eines Anschlusses 12a, 12b entlang der Einführrichtung Z nicht möglich. Ferner ist im wesentlichen ein Verlagern eines Anschlusses 12a, 12b entlang oder entgegen einer Querrichtung Y nicht möglich, wobei die Querrichtung Y im wesentlichen senkrecht zur Längsrichtung X und im wesentlichen senkrecht zur Einführrichtung Z ist.

Insbesondere ist ein Anschluß 12a, 12b in der Kontaktposition in Reibschluß mit der entsprechenden Anschlußaufnahme 26a, 26b, so daß ein Verlagern des Anschlusses 12a, 12b bzw. der Axial-Diode 14 entlang oder entgegen der Einführrichtung Z nur unter Aufbringen einer vorbestimmten minimalen Verlagerungskraft K möglich ist, wobei die minimale Verlagerungskraft K größer als etwa 0,05 N, bevorzugt größer als etwa 0,1 N, weiter bevorzugt größer als etwa 0,5 N und insbesondere größer als etwa 1 N ist, so daß die Axial-Diode in der Kontaktposition verbleibt.

Um einen hinreichenden Reibschluß zu erreichen ist der lichte Innenabstand zwischen zwei Wandungen 28a, 28b einer Anschlußäufnahme 26a, 26b und der Außendurchmesser des aufzunehmenden Abschlusses 12a, 12b etwa gleich groß. Insbesondere können die Wandungen 28a, 28b der Anschlußaufnahme 26a, 26b rückstellfähig verformbar ausgebildet sein, so daß ein Anschluß 12a, 12b die Wandungen 28a, 28b der Anschlußaufnahme 26a, 26b, insbesondere elastisch, verformt, so daß der Anschluß 12a, 12b und damit die Axial-Diode 14 zwischen den Wandungen 28a, 28b festgeklemmt ist.

Die Anschlußhalteeinrichtung 24a 24b weist vorzugsweise auf der dem Solarmodul 4 abgewandten Seite eine Rampe 30a, 30b auf, die beispielsweise als Fläche oder als Grat ausgebildet sein kann. Die Rampe 30a, 30b grenzt an die Anschlußaufnahme 26a, 26b an, wobei die Rampe 30a, 30b zur Anschlußaufnahme 26a, 26b entlang der Einführrichtung Z hin fallend geneigt ist. Die Rampe 30a, 30b geht in die Anschlußaufnahme 26a, 26b über.

Bei der in Figur 2 gezeigten Ausführungsform sind zwei Anschlußhalteeinrichtung 24a, 24b mit jeweils einer Rampe 30a, 30b derart beabstandet voneinander an dem Überbrückungsdosengrundelement 16 angeordnet, daß die Rampen 30a, 30b als Auflager einer Axial-Diode 14 fungieren können. Dabei wird das Diodengehäuse 14a zwischen den Anschlußhalteeinrichtung 24a 24b angeordnet, wobei die Anschlüsse 12a, 12b der Axial-Diode 14 jeweils auf einer Rampe 30a, 30b aufliegen können. Aufgrund der Neigung bzw. des Fallens der Rampen 30a, 30b rollt bzw. rutscht die Axial-Diode 14 auf ihren Anschlüssen 12a, 12b entlang der Rampen 30a, 30b zu den Anschlußaufnahmen 26a, 26b hin. Alternativ oder zusätzlich ist die Axial-Diode 14 mittels der Rampen 30a, 30b manuell oder automatisch zu den Anschlußaufnahmen 26a, 26b hin führbar. Die Rampen 30a, 30b und die Anschlußaufnahmen 26a, 26b können insbesondere derart ausgelegt sein, daß die Axial-Diode 14 nach dem Rollen bzw. Rutschen bzw. Hinführen in die Anschlußaufnahmen 26a, 26b aufgenommen werden, so daß die Axial-Diode 14 in die Kontaktposition gelangt.

Vorzugsweise ist der Diodenhalter 22 derart relativ zum Solarmodul 4 angeordnet und ausgebildet, daß die Axial-Diode 14 in der Kontaktposition derart durch den Diodenhalter positioniert ist, daß die Anschlüsse 12a, 12b die elektrischen Leiter 10a, 10b des Solarmoduls 4 kontaktieren. Insbesondere sind die elektrischen Leiter 10a, 10b rückstellfähig ausgebildet, so daß jeweils eine Kontaktkraft an dem zugeordneten Anschluß 12a, 12b der Axial-Diode 14 anliegt, wenn sich die Axial-Diode 14 in der Kontaktposition befindet.

Insbesondere erstreckt sich ein elektrischer Leiter 10a, 10b entlang der Querrichtung Y derart, daß er zumindest teilweise auf gleicher Höhe entlang der Querrichtung Y liegt, wie zugehörigen Anschlußaufnahmen 26a, 26b. Wird ein Anschluß 12a, 12b der Axial-Diode 14 in die zugeordnete Anschlußaufnahme 26a, 26b eingeführt, so wird der elektrischer Leiter 10a, 10b entlang oder entgegen der Querrichtung Y durch den Anschluß 12a, 12b verlagert bzw. verbogen. Aufgrund der Rückstellfähigkeit des elektrischen Leiters 10a, 10b wirkt eine Kontaktkraft auf den zugeordneten Anschluß 12a, 12b, so daß der elektrische Leiter 10a, 10b und der den zugeordneten Anschluß 12a, 12b kontaktieren.

Um das oben beschriebene Kontaktieren sicherzustellen, sind die relativen Positionen der elektrischen Leiter 10a, 10b und der Anschlüsse 12a, 12b zueinander in der Kontaktposition vorzugsweise mit hinreichender Genauigkeit vorbestimmbar. Vorzugsweise umfaßt die Überbrückungsdose 6 deshalb eine Leiterführung 32 zur Führung bzw. Positionierung der durch die Durchführöffnungen 18a, 18b in das Innere der Überbrückungsdose 6 geführten elektrischen Leiter 10a, 10b. Die Leiterführung 32 erstreckt sich vorzugsweise im wesentlichen entlang der Längsrichtung X und der Einführrichtung Z, wobei der Abstand zwischen der Wandung der Leiterführung 32, welche der zugeordneten Anschlußaufnahme 26a, 26b zugewandt ist, und der Wandung 28a, 28b, welche in Querrichtung Y der Leiterführuhg 32 an nächsten ist, kleiner ist als die Dicke des elektrischen Leiters 10a, 10b. Dadurch wird ein Verbiegen des rückstellfähigen elektrischen Leiters 10a, 10b durch den zugehörigen Anschluß 12a, 12b bewirkt, so daß eine sichere Kontaktierung resultiert.

### Bezugszeichenliste

- 2: Solarpaneel
- 4: Solarmodul
- 6: Überbrückungsdose
- 8: Überbrückungsdosendeckel
- 9: Einfüllöffnung
- 10a-10d: elektrische Leiter
- 12a,12b: Anschlüsse der Axial-Diode
- 14: Axial-Diode
- 14a: Diodengehäuse
- 16: Überbrückungsdosengrundelement
- 18a, 18b: Durchführöffnung
- 20: Überbrückungsdosenbefestigungselement
- 22: Diodenhalter
- 24a, 24b: Anschlußhalteeinrichtungen
- 26a, 26b: Anschlußaufnahme
- 28a, 28b: Wandung der Anschlußaufnahme
- 30a, 30b: Rampe
- 32: Leiterführung

## Patentansprüche

1. Solarpaneel, umfassend:
- ein Solarmodul (4) mit
-- zumindest zwei elektrischen Leitern (10a, 10b) und
- eine elektrische Überbrückungsdose (6), mit
-- einem elektrisch isolierenden Diodenhalter (22) und
-- einer Axial-Diode (14) mit zwei Anschlüssen (12a, 12b),
wobei die Axial-Diode (14) mittels des Diodenhalters (22) in einer Kontaktposition gehalten ist,
wobei in der Kontaktposition der eine elektrische Leiter (10a) des Solarmoduls (4) mit dem einen Anschluß (12a) unmittelbar kontaktiert ist und der andere elektrische Leiter (10b) des Solarmoduls (4) mit dem anderen Anschluß (12b) unmittelbar kontaktiert ist, so daß die zwei elektrischen Leiter (10a, 10b) mittels der Axial-Diode (14) elektrisch miteinander verbunden sind.

2. Solarpaneel nach Anspruch 1, wobei die zwei elektrischen Leiter (10a, 10b) derart rückstellfähig ausgebildet und angeordnet sind, daß jeweils eine Kontaktkraft an dem zugeordneten Anschluß (12a, 12b) der Axial-Diode (14) anliegt, wenn sich die Axial-Diode (14) in der Kontaktposition befindet.

3. Solarpaneel nach einem der vorherigen Ansprüche, wobei der Diodenhalter (22) zwei Anschlußhalteeinrichtungen (24a, 24b) umfaßt,
wobei jede Anschlußhalteeinrichtung (24a, 24b) auf der dem Solarmodul abgewandten Seite eine Anschlußaufnahme (26a, 26b) aufweist,
wobei jeder Anschluß (12a, 12b) eine Längserstreckung entlang einer Längsrichtung (X) aufweist,
wobei jede Anschlußaufnahme (26a, 26b) ausgelegt ist, daß der zugeordnete Anschluß (12a, 12b) entlang einer Einführrichtung (Z) in die Anschlußaufnahme (26a, 26b) einführbar und festlegbar ist und
wobei die Längsrichtung (X) und die Einführrichtung (Z) im wesentlichen senkrecht zueinander stehen,
wobei die Anschlußaufnahme (26a, 26b) bevorzugt einen Durchmesser aufweist, der etwa gleich groß dem Durchmesser des Anschlusses (12a, 12b) ist.

4. Solarpaneel nach Anspruch 3, wobei die Anschlußhalteeinrichtung (24a, 24b) auf der dem Solarmodul (4) abgewandten Seite eine Rampe (30a, 30b) aufweist,
wobei die Rampe (30a, 30b) an die Anschlußaufnahme (26a, 26b) angrenzt und
wobei die von dem Solarmodul (4) abgewandte Seite der Rampe (30a, 30b) zur Anschlußaufnahme (26a, 26b) hin abfallend geneigt ist.

5. Solarpaneel nach einem der vorherigen Ansprüche, wobei der Diodenhalter (22) eine Diodengehäusehalteeinrichtung umfaßt,
wobei die Diodengehäusehalteeihrichtung auf der dem Solarmodul (4) abgewandten Seite eine Diodengehäuseaufnahme aufweist,
wobei die Axial-Diode (14) eine Längserstreckung entlang einer Längsrichtung (X) aufweist,
wobei die Diodengehäuseaufnahme ausgelegt ist, daß die Axial-Diode (14) entlang einer Einführrichtung (Z) in die Diodengehäuseaufnahme einführbar und festlegbar ist und
wobei die Längsrichtung (X) und die Einführrichtung (Z) im wesentlichen senkrecht zueinander stehen,
wobei die Diodengehäuseaufnahme bevorzugt einen Durchmesser aufweist, der etwa gleich groß dem Durchmesser des Diodengehäuses ist.

6. Solarpaneel nach Anspruch 5, wobei die Diodengehäusehalteeinrichtung auf der dem Solarmodul abgewandten Seite eine Rampe aufweist,
wobei die Rampe an die Diodengehäuseaufnahme angrenzt und
wobei die von dem Solarmodul abgewandte Seite der Rampe zur Diodengehäuseaufnahme hin abfallend geneigt ist.

7. Solarpaneel nach einem der vorherigen Ansprüche, weiter umfassend:
-- ein Überbrückungsdosengrundelement (16) mit zumindest einer Durchführöffnung (18a, 18b),
wobei die elektrischen Leiter (10a, 10b) des Solarmoduls (4) durch die zumindest eine Durchführöffnung (18a, 18b) geführt sind, um mit der Axial-Diode (14) kontaktiert zu sein,
wobei bevorzugt jeweils ein elektrischer Leiter (10a, 10b) des Solarmoduls (4) durch eine zugeordnete Durchführöffnung (18a, 18b) geführt ist, um mit der zumindest einen Axial-Diode (14) kontaktiert zu sein.

8. Solarpaneel nach einem der vorherigen Ansprüche, wobei das Überbrückungsdosengrundelement (16) zumindest ein Überbrückungsdosenbefestigungselement (20) umfaßt und wobei die Überbrückungsdose (6) mittels des zumindest einen Überbrückungsdosenbefestigungselements (20) an dem Solarmodul (4) befestigt ist.

9. Solarpaneel nach einem der vorherigen Ansprüche, wobei die Überbrückungsdose (6) einen Überbrückungsdosendeckel (8) aufweist und wobei der Überbrückungsdosendeckel (8) eine Einfüllöffnung (9) aufweist.

10. Solarpaneel nach einem der vorherigen Ansprüche, wobei das Innere der Überbrückungsdose (6) feuchtigkeitsdichtend mit Kunstharz ausgegossen ist.

11. Verfahren zum Herstellen eines Solarpaneels (2), umfassend die Schritte:
- Bereitstellen eines Solarmoduls (4) mit
-- zumindest zwei elektrischen Leitern (10a, 10b),
- Bereitstellen einer Axial-Diode (14) mit zwei Anschlüssen (12a, 12b), wobei die Axial-Diode (14) und die Anschlüsse (12a, 12b) eine Längserstreckung (X) aufweisen,
- Bereitstellen zumindest einer elektrischen Überbrückungsdose (6), mit einem elektrisch isolierenden Diodenhalter (22), welcher zwei Anschlußhalteeinrichtungen (24a, 24b) umfaßt,
wobei jede Anschlußhalteeinrichtung (24a, 24b) auf der dem Solarmodul abgewandten Seite eine Anschlußaufnahme (26a, 26b) aufweist, wobei jede Anschlußaufnahme (26a, 26b) ausgelegt ist, daß der zugeordnete Anschluß (12a, 12b) entlang einer Einführrichtung (Z) in die Anschlußaufnahme (26a, 26b) einführbar und festlegbar ist und wobei die Längsrichtung (X) und die Einführrichtung (Z) im wesentlichen senkrecht zueinander stehen,
- Befestigen der Überbrückungsdose (6) auf dem Solarmodul (4),
- Einführen der Anschlüsse (12a, 12b) in die Anschlußaufnahmen (26a, 26b) und festlegen der Axial-Diode in einer Kontaktposition
- unmittelbares Kontaktieren des einen elektrischen Leiters (10a) des Solarmoduls (4) mit dem einen Anschluß (12a) und unmittelbares Kontaktieren des anderen elektrischen Leiters (10b) des Solarmoduls (4) mit dem anderen Anschluß (12b), so daß die zwei elektrischen Leiter (10a, 10b) mittels der Axial-Diode (14) elektrisch miteinander verbunden sind,
wobei die Überbrückungsdose (6) vorzugsweise ein Haftmittel als Überbrückungsdosenbefestigungselement (20) aufweist, um die Überbrückungsdose (6) an dem Solarmodul (4) befestigen zu können.

12. Verfahren nach Anspruch 11, umfassend den weiteren Schritt:
- Anordnen eines Überbrückungsdosendeckels (8) an der Überbrückungsdose (6)
und/oder umfassend den weiteren Schritt:
- Ausgießen des Inneren der Überbrückungsdose (6) mit Kunstharz durch eine Einfüllöffnung (9) des Überbrückungsdosendeckels (8).

13. Überbrückungsdose, umfassend:
- ein Überbrückungsdosengrundelement (16), welches ausgelegt ist an einem Solarmodul befestigt zu sein, wobei zwei Durchführöffnungen (18a, 18b) in dem Überbrückungsdosengrundelement (16) ausgebildet sind, so daß elektrische Leiter (10a, 10b) des Solarmoduls (4) durch die Durchführöffnungen (18a, 18b) durchführbar sind,
- einen elektrisch isolierenden Diodenhalter (22), mit zwei Anschlußhalteeinrichtungen (24a, 24b),
wobei jede Anschlußhalteeinrichtung (24a, 24b) auf der dem Überbrückungsdosengrundelement (16) abgewandten Seite eine Anschlußaufnahme (26a, 26b) aufweist,
wobei jede Anschlußaufnahme (26a, 26b) ausgelegt ist, daß ein Anschluß einer Axial-Diode, welcher sich in Längsrichtung (X) erstreckt, entlang einer Einführrichtung (Z) in die Anschlußaufnahme (26a, 26b) einführbar und in einer Kontaktposition festlegbar ist,
wobei die Längsrichtung (X) und die Einführrichtung (Z) im wesentlichen senkrecht zueinander stehen
wobei die durch die Durchführöffnungen (18a, 18b) durchgeführten elektrischen Leiter (10a, 10b) des Solarmoduls (4) mit den Anschlüssen der Axial-Diode unmittelbar kontaktierbar sind.

14. Überbrückungsdose nach Anspruch 13, wobei die Anschlußhalteeinrichtung (24a, 24b) auf der dem Überbrückungsdosengrundelement (16) abgewandten Seite eine Rampe (30a, 30b) aufweist,
wobei die Rampe (30a, 30b) an die Anschlußaufnahme (26a, 26b) angrenzt und
wobei die von dem Überbrückungsdosengrundelement (16) abgewandte Seite der Rampe (30a, 30b) zur Anschlußaufnahme (26a, 26b) hin abfallend geneigt ist.

## Claims

1. A solar panel comprising:
- a solar module (4) including
-- at least two electrical conductors (10a, 10b) and
- an electrical bridging socket (6) including
-- an electrically insulating diode mount (22) and
-- an axial diode (14) having two terminals (12a, 12b),
wherein the axial diode (14) is retained in its contact position by means of the diode mount (22),
wherein in the contact position the one electrical conductor (10a) of the solar module (4) directly contacts the one terminal (12a) and the other electrical conductor (10b) of the solar module (4) directly contacts the other terminal (12b) such that the two electrical conductors (10a, 10b) are electrically connected to each other by means of the axial diode (14).

2. The solar panel according to claim 1, wherein the two electrical conductors (10a, 10b) are formed and arranged restorably such that one contact force acts on each corresponding terminal (12a, 12b) of the axial diode (14), respectively, if the axial diode (14) is in the contact position.

3. The solar panel according to any of the preceding claims, wherein the diode mount (22) includes two terminal mounting means (24a, 24b),
wherein each terminal mounting means (24a, 24b) comprises a terminal reception means (26a, 26b) on the side facing away from the solar module,
wherein each terminal (12a, 12b) has a longitudinal extension along a longitudinal direction (X),
wherein each terminal reception (26a, 26b) is designed such that the corresponding terminal (12a, 12b) is insertable and settable along an insertion direction (Z) into the terminal reception (26a, 26b), and
wherein the longitudinal direction (X) and the insertion direction (Z) are essentially perpendicular to each other,
wherein the terminal reception (26a, 26b) has preferably a diameter that is approximately the same as the diameter of the terminal (12a, 12b).

4. The solar panel according to claim 3, wherein the terminal mounting means (24a, 24b) comprises a ramp (30a, 30b) on the side facing away from the solar module (4),
wherein the ramp (30a, 30b) adjoins the terminal reception (26a, 26b), and
wherein the side of the ramp (30a, 30b) facing away from the solar module (4) is sloping downward towards the terminal reception (26a, 26b).

5. The solar panel according to any of the preceding claims, wherein the diode mount (22) comprises a diode housing mounting means,
wherein the diode housing mounting means comprises a diode housing reception on the side facing away from the solar module (4),
wherein the axial diode (14) has a longitudinal extension along a longitudinal direction (X),
wherein each diode housing reception is designed such that the axial diode (14) is insertable and settable along an insertion direction (Z) into the diode housing reception, and
wherein the longitudinal direction (X) and the insertion direction (Z) are essentially perpendicular to each other,
wherein the diode housing reception has preferably a diameter that is approximately the same as the diameter of the diode housing.

6. The solar panel according to claim 5, wherein the diode housing mounting means comprises a ramp on the side facing away from the solar module,
wherein the ramp adjoins the diode housing reception, and
wherein the side of the ramp facing away from the solar module is sloping downward towards the diode housing reception.

7. The solar panel according to any of the preceding claims, further comprising:
-- a bridging socket base member (16) including at least one feed-through opening (18a, 18b),
wherein the electrical conductors (10a, 10b) of the solar module (4) are fed through at least one feed-through opening (18a, 18b) to be in contact with the axial diode (14),
wherein preferably one electrical conductor (10a, 10b) of the solar module (4) is fed through a corresponding feed-through opening (18a, 18b), respectively to be in contact with the at least one axial diode (14).

8. The solar panel according to any of the preceding claims, wherein the bridging socket base member (16) includes at least one bridging socket fixing member (20) and wherein the bridging socket (6) is fixed to the solar module (4) by means of at least one bridging socket fixing member (16).

9. The solar panel according to any of the preceding claims, wherein the bridging socket (6) comprises a bridging socket cover (8), and wherein the bridging socket cover (8) comprises a fill opening (9).

10. The solar panel according to any of the preceding claims, wherein the inner of the bridging socket (6) is filled with synthetic resin in a moisture-tight manner.

11. A method for producing a solar panel (2), comprising the steps of:
- providing a solar module (4) including
-- at least two electrical conductors (10a, 10b),
- providing an axial diode (14) having two terminals (12a, 12b), wherein the axial diode (14) and the terminals (12a, 12b) have a longitudinal extension (X),
- providing at least one electrical bridging socket (6) including an electrically insulating diode mount (22) having two terminal mounting means (24a, 24b),
wherein each terminal mounting means (24a, 24b) comprises a terminal reception means (26a, 26b) on the side facing away from the solar module (4),
wherein each terminal reception (26a, 26b) is designed such that the corresponding terminal (12a, 12b) is insertable and settable along an insertion direction (Z) into the terminal reception (26a, 26b), and
wherein the longitudinal direction (X) and the insertion direction (Z) are essentially perpendicular to each other,
- fixing the bridging socket (6) to the solar module (4),
- inserting the terminals (12a, 12b) into the terminal receptions (26a, 26b) and setting the axial diode in a contact position,
- contacting the one electrical conductor (10) of the solar module (4) directly with the one terminal (12a) and contacting the other electrical conductor (10b) of the solar module (4) with the other terminal (12b) such that the two electrical conductors (10a, 10b) are electrically connected by means of the axial diode (14),
wherein the bridging socket (6) preferably comprises a bonding means as a bridging socket fixing member (20) to enable fixing of the bridging socket (6) to the solar module (4).

12. The method according to claim 11 comprising the further step of
- arranging a bridging socket cover (8) at the bridging socket (6), and/or comprising the further step of
- filling the inner of the bridging socket (6) with synthetic resin through a fill opening (9) of the bridging socket cover (8).

13. A bridging socket, comprising:
- a bridging socket base member (16) that is designed to be fixed at a solar module, wherein two feed-through openings (18a, 18b) are formed in the bridging socket base member (16), such that electrical conductors (10a, 10b) of the solar module (4) can be fed-through the feed-through openings (18a, 18b),
- an electrically insulating diode mount (22) having two terminal mounting means (24a, 24b),
wherein each terminal mounting means (24a, 24b) comprises a terminal reception means (26a, 26b) on the side facing away from the bridging socket base member (16),
wherein each terminal reception (26a, 26b) is designed such that the terminal of an axial diode extending in the longitudinal direction (X) is insertable along an insertion direction (Z) into the terminal reception (26a, 26b) and settable in a contact position,
wherein the longitudinal direction (X) and the insertion direction (Z) are essentially perpendicular to each other,
wherein the electrical conductors (18a, 18b) of the solar module (4) fed-through the feed-through openings (18a, 18b) can be contacted directly with the terminals of the axial diode.

14. The bridging socket according to claim 13, wherein the terminal mounting means (24a, 24b) comprises a ramp (30a, 30b) on the side facing away from the bridging socket base member (16),
wherein the ramp (30a, 30b) adjoins the terminal reception (26a, 26b), and
wherein the side of the ramp (30a, 30b) facing away from the bridging socket base member (16) is sloping downward towards the terminal reception (26a, 26b).

## Revendications

1. Panneau solaire comprenant :
- un module solaire (4) avec
-- au moins deux conducteurs électriques (10a, 10b) et
- une prise de pontage électrique (6) avec
-- un support de diode isolant électriquement (22) et
-- une diode axiale (14) avec deux raccords (12a, 12b),
dans lequel la diode axiale (14) est maintenue au moyen du support de diode (22) dans une position de contact,
dans lequel un des conducteurs électriques (10a) du module solaire (4) vient en contact direct avec un des raccords (12a) dans la position de contact et l'autre conducteur électrique (10b) du module solaire (4) vient en contact direct avec l'autre raccord (12b) de sorte que les deux conducteurs électriques (10a, 10b) sont reliés électriquement ensemble au moyen de la diode axiale (14).

2. Panneau solaire selon la revendication 1, dans lequel les deux conducteurs électriques (10a, 10b) sont réalisés et disposés de manière à pouvoir être réinitialisés de telle sorte qu'une force de contact repose à chaque fois sur le raccord associé (12a, 12b) de la diode axiale (14) lorsque la diode axiale (14) se trouve dans la position de contact.

3. Panneau solaire selon une des revendications précédentes, dans lequel le support de diode (22) comprend deux dispositifs de maintien de raccord (24a, 24b), dans lequel chaque dispositif de maintien de raccord (24a, 24b) présente sur le côté détourné du module solaire une réception de raccord (26a, 26b),
dans lequel chaque raccord (12a, 12b) présente un prolongement longitudinal le long d'un sens longitudinal (X),
dans lequel chaque réception de raccord (26a, 26b) est conçue de sorte que le raccord associé (12a, 12b) peut être introduit et peut être fixé le long d'un sens d'introduction (Z) dans la réception de raccord (26a, 26b), et
dans lequel le sens longitudinal (X) et le sens d'introduction (Z) se trouvent essentiellement perpendiculairement l'un à l'autre,
dans lequel la réception de raccord (26a, 26b) présente de préférence un diamètre qui est approximativement aussi grand que le diamètre du raccord (12a, 12b).

4. Panneau solaire selon la revendication 3, dans lequel le dispositif de maintien de raccord (24a, 24b) présente sur le côté détourné du module solaire (4) une rampe (30a, 30b),
dans lequel la rampe (30a, 30b) est adjacente à la réception de raccord (26a, 26b) et
dans lequel le côté détourné du module solaire (4) de la rampe (30a, 30b) est incliné en pente vers la réception de raccord (26a, 26b).

5. Panneau solaire selon une des revendications précédentes, dans lequel le support de diode (22) comprend un dispositif de maintien de logement de diode,
dans lequel le dispositif de maintien de logement de diode présente sur le côté détourné du module solaire (4) une réception de logement de diode,
dans lequel la diode axiale (14) présente un prolongement longitudinal le long d'un sens longitudinal (X),
dans lequel la réception de logement de diode est conçue de sorte que la diode axiale (14) peut être introduite et peut être fixée le long d'un sens d'introduction (Z) dans la réception de logement de diode, et
dans lequel le sens longitudinal (X) et le sens d'introduction (Z) se trouvent essentiellement perpendiculairement l'un à l'autre,
dans lequel la réception de logement de diode présente de préférence un diamètre qui est approximativement aussi grand que le diamètre du logement de diode.

6. Panneau solaire selon la revendication 5, dans lequel le dispositif de maintien de logement de diode présente sur le côté détourné du module solaire une rampe, dans lequel la rampe est adjacente à la réception de logement de diode et
dans lequel le côté détourné du module solaire de la rampe est incliné en pente vers la réception de logement de diode.

7. Panneau solaire selon une des revendications précédentes, comprenant en outre :
-- un élément de base de prise de pontage (16) avec au moins une ouverture de passage (18a, 18b),
dans lequel les conducteurs électriques (10a, 10b) du module solaire (4) sont guidés à travers l'au moins une ouverture de passage (18a, 18b) pour venir en contact avec la diode axiale (14),
dans lequel un conducteur électrique (10a, 10b) du module solaire (4) est à chaque fois de préférence guidé à travers une ouverture de passage associée (18a, 18b) pour venir en contact avec l'au moins une diode axiale (14).

8. Panneau solaire selon une des revendications précédentes, dans lequel l'élément de base de prise de pontage (16) comprend au moins un élément de fixation de prise de pontage (20) et dans lequel la prise de pontage (6) est fixée au moyen de l'au moins un élément de fixation de prise de pontage (20) au module solaire (4).

9. Panneau solaire selon une des revendications précédentes, dans lequel la prise de pontage (6) présente un couvercle de prise de pontage (8) et dans lequel le couvercle de prise de pontage (8) présente une ouverture de remplissage (9).

10. Panneau solaire selon une des revendications précédentes, dans lequel l'intérieur de la prise de pontage (6) est coulé avec de la résine synthétique de manière étanche à l'humidité.

11. Procédé de fabrication d'un panneau solaire (2) comprenant les étapes :
- mise à disposition d'un module solaire (4) avec
-- au moins deux conducteurs électriques (10a, 10b),
- mise à disposition d'une diode axiale (14) avec deux raccords (12a, 12b), dans lequel la diode axiale (14) et les raccords (12a, 12b) présentent un prolongement longitudinal (X),
- mise à disposition d'au moins une prise de pontage électrique (6) avec un support de diode isolant électriquement (22) qui comprend deux dispositifs de maintien de raccord (24a, 24b),
dans lequel chaque dispositif de maintien de raccord (24a, 24b) présente sur le côté détourné du module solaire une réception de raccord (26a, 26b),
dans lequel chaque réception de raccord (26a, 26b) est conçue de sorte que le raccord associé (12a, 12b) peut être introduit et peut être fixé le long d'un sens d'introduction (Z) dans la réception de raccord (26a, 26b), et
dans lequel le sens longitudinal (X) et le sens d'introduction (Z) se trouvent essentiellement perpendiculairement l'un à l'autre,
- fixation de la prise de pontage (6) sur le module solaire (4),
- introduction des raccords (12a, 12b) dans les réceptions de raccord (26a, 26b) et fixation de la diode axiale dans une position de contact,
- mise en contact directe d'un des conducteurs électriques (10a) du module solaire (4) avec un des raccords (12a) et mise en contact directe de l'autre conducteur électrique (10b) du module solaire (4) avec l'autre raccord (12b) de sorte que les deux conducteurs électriques (10a, 10b) sont reliés électriquement ensemble au moyen de la diode axiale (14),
dans lequel la prise de pontage (6) présente de préférence un agent adhésif comme élément de fixation de prise de pontage (20) pour pouvoir fixer la prise de pontage (6) au module solaire (4).

12. Procédé selon la revendication 11, comprenant l'étape supplémentaire :
- disposition d'un couvercle de prise de pontage (8) sur la prise de pontage (6) et/ou comprenant l'étape supplémentaire :
- coulée de l'intérieur de la prise de pontage (6) avec de la résine synthétique à travers une ouverture de remplissage (9) du couvercle de prise de pontage (8).

13. Prise de pontage comprenant :
- un élément de base de prise de pontage (16) qui est conçu pour être fixé à un module solaire, dans laquelle deux ouvertures de passage (18a, 18b) sont réalisées dans l'élément de base de prise de pontage (16) de sorte que des conducteurs électriques (10a, 10b) du module solaire (4) peuvent être passés à travers les ouvertures de passage (18a, 18b),
- un support de diode isolant électriquement (22) avec deux dispositifs de maintien de raccord (24a, 24b),
dans laquelle chaque dispositif de maintien de raccord (24a, 24b) présente sur le côté détourné de l'élément de base de prise de pontage (16) une réception de raccord (26a, 26b),
dans laquelle chaque réception de raccord (26a, 26b) est conçue de sorte qu'un raccord d'une diode axiale qui s'étend dans le sens longitudinal (X) peut être introduit le long d'un sens d'introduction (Z) dans la réception de raccord (26a, 26b) et peut être fixé dans une position de contact,
dans laquelle le sens longitudinal (X) et le sens d'introduction (Z) se trouvent essentiellement perpendiculairement l'un à l'autre,
dans laquelle les conducteurs électriques (10a, 10b) passés à travers les ouvertures de passage (18a, 18b) du module solaire (4) peuvent venir en contact direct avec les raccords de la diode axiale.

14. Prise de pontage selon la revendication 13, dans laquelle le dispositif de maintien de raccord (24a, 24B) présente sur le côté détourné de l'élément de base de prise de pontage (16) une rampe (30a, 30b),
dans laquelle la rampe (30a, 30b) est adjacente à la réception de raccord (26a, 26b) et
dans laquelle le côté détourné de l'élément de base de prise de pontage (16) de la rampe (30a, 30b) est incliné en pente vers la réception de raccord (26a, 26b).
